# FASCICULE DE BREVET EUROPEEN

(11) **EP 3 071 436 B1**
(45) Date de publication et mention de la délivrance du brevet: **23.05.2018**
(21) Numéro de dépôt: 14793482.2
(22) Date de dépôt: 23.10.2014
(51) Int. Cl.: F28F 9/013, F28D 1/06, F28F 1/02, H01M 10/625, B60K 1/04, B60K 1/00, B60L 11/18, H01M 10/623, H01M 10/6554, H01M 10/655, H01M 10/613

(54) **DISPOSITIF DE SUPPORT D'UN TUBE, NOTAMMENT D'UN TUBE D'UN ECHANGEUR DE CHALEUR DESTINE A VENIR EN CONTACT D'UNE BATTERIE DE VEHICULE AUTOMOBILE**
TRÄGERVORRICHTUNG FÜR EIN ROHR, INSBESONDERE EINES WÄRMETAUSCHERROHRES IN KONTAKT MIT EINER KRAFTFAHRZEUGBATTERIE
SUPPORT DEVICE FOR A TUBE, IN PARTICULAR A TUBE OF A HEAT EXCHANGER DESIGNED TO COME INTO CONTACT WITH A MOTOR VEHICLE BATTERY

(30) Priorité: 18.11.2013 FR 1361267
(43) Date de publication de la demande: 28.09.2016
(73) Titulaire: Valeo Systemes Thermiques, 78320 Le Mesnil Saint Denis (FR)
(72) Inventeur: LEGOT, Laurent, F-75020 Paris (FR); BIREAUD, Fabien, F-78320 Le Mesnil Saint-Denis (FR)
(74) Mandataire: Tran, Chi-Hai
(86) Numéro de dépôt international: PCT/EP2014/072769
(87) Numéro de publication internationale: WO 2015/071068

(56) Documents cités:
- EP-A1- 2 388 851
- DE-A1-102010 032 898
- DE-A1-102010 038 681
- DE-U1-202012 102 969

## Description

La présente invention concerne un dispositif de support d'un tube, notamment d'un tube d'un échangeur de chaleur destiné à venir en contact d'une batterie de véhicule automobile, en particulier pour le refroidissement de cette batterie.

Pour s'assurer d'un bon contact entre la batterie et l'échangeur de chaleur, malgré les différents jeux de montage pouvant intervenir, une possibilité est d'utiliser un ressort de compression.

Plus précisément, on peut faire appel à un support de tube, comprenant une base sur laquelle est monté le tube et un élément de compression configuré pour appliquer en pression le tube contre la batterie, l'élément de compression étant constitué d'un ressort, sensiblement en forme de lame, fixé à la base au moyen de clips engagés dans des trous d'une partie centrale de la lame. Néanmoins, les trous de l'élément de compression fragilisent ce dernier et nuisent à la fiabilité du support.

L'invention vise à remédier en tout ou partie à cet inconvénient.

Il est proposé à cet effet un dispositif support d'un tube conformément à la revendication 1. Ainsi, les éléments de fixation ne nécessitent pas de trous de perçage dans le corps de l'élément de compression et évitent de le fragiliser.

Lesdites première et seconde faces sont avantageusement opposées l'une à l'autre de sorte que l'effort appliqué par l'élément de compression sur la seconde face est transmis directement au tube par la première face.

Selon d'autres caractéristiques de l'invention qui peuvent être prises ensemble ou séparément :
- ladite base est pourvue de nervures sur sa première face, lesdites nervures étant destinées à être appliquées sur le tube par leur extrémité, renforçant ainsi un maintien du tube isolé thermiquement,
- l'élément de compression est monté flexible sur la base,
- ledit évidement est conformé pour correspondre à une extension maximale du ressort,
- ledit évidement est conformé pour définir latéralement, selon une coupe transversale, deux zones d'appui linéaire contre lesquelles vient en appui le ressort en extension au moins nominale,
- ladite bande de ressort est destinée à être montée flexible sur une surface d'appui,
- ladite bande de ressort comporte deux plis ou jambes opposés, notamment symétriques par rapport à un plan longitudinal médian de la bande, lesdits plis étant configurés pour être mobiles sur la surface d'appui,
- lesdits deux plis opposés comportent des pattes flexibles destinées à être appliquées sur la surface d'appui,
- ladite bande de ressort est d'épaisseur égale à environ 0,1 à 0,3 mm, de préférence d'épaisseur comprise entre 0.15 et 0.2 mm.
- lesdits éléments de liaison sont configurés pour venir en prise de part et d'autre de bords opposés longitudinaux de l'élément de compression, en particulier de part et d'autre de bords opposés longitudinaux de ladite bande, notamment au niveau dudit sommet arrondi,
- lesdits éléments de liaison comprennent un ou des éléments de prise en forme de crochet, de préférence deux éléments de prise en forme de crochet maintenant ledit élément de compression de part et d'autre de la base, par exemple au niveau desdits bords opposés longitudinaux de la bande de ressort, notamment au niveau du sommet arrondi de la bande de ressort,
- lesdits deux éléments de prise en forme de crochet sont de préférence identiques l'un à l'autre, et opposés l'un à l'autre relativement à un plan transversal médian de la bande,
- lesdits deux éléments de prise en forme de crochet comprennent une branche disposée à distance du sommet du ressort pour permettre un débattement en flexibilité du ressort,
- lesdits deux éléments de prise en forme de crochet sont disposés sur la base pour permettre le montage ou démontage du ressort en rotation par une extrémité d'un des bords, notamment d'un des plis du ressort, engagé entre la base et chacun des éléments de prise en forme de crochet,
- lesdits éléments de liaison et ledit élément de compression sont respectivement configurés pour que, au montage de l'élément de compression, ce dernier, en particulier ladite bande, soit comprimé sur les éléments de liaison, de manière à solidariser, notamment par pincement, l'élément de compression à la base ; on renforce de la sorte le maintien de l'élément de compression sur la base en profitant de son élasticité,
- le ou les éléments de liaison , en particulier le ou lesdits éléments de prise en forme de crochet, sont formés en une seule pièce avec la base, de préférence issus de moulage de matière, en particulier en matière plastique,
- le ou lesdits éléments de liaison, en particulier le ou lesdits éléments de prise en forme de crochet, sont montés rapportés sur la base,
- le ressort et la base sont disposés en vis-à-vis sur une longueur sensiblement équivalente, le ressort étant notamment découpé à ses extrémités,
- le ou lesdits éléments de liaison comportent une sangle élastique apte à être tendue sous l'élément de compression.

L'invention concerne également l'ensemble d'un échangeur de chaleur, comprenant des tubes, et d'une pluralité de dispositifs support, tel que décrits ci-dessus, supportant lesdits tubes.

L'invention concerne également une batterie comprenant un tel ensemble. Dans ladite batterie, les tubes sont en particulier appliqués contre une face de dessous de la batterie en vue de son refroidissement.

D'autres caractéristiques et avantages de l'invention apparaîtront à la lecture de la description qui suit d'exemples de réalisation donnés à titre illustratif en référence aux dessins annexés, sur lesquels:
- la figure 1 est une vue en perspective partielle d'un dispositif support de tube selon un mode de réalisation de l'invention,
- la figure 2 est une vue en perspective de dessous d'une partie d'extrémité de la base du dispositif de la figure 1,
- La figure 3 est une vue en perspective de dessus d'une partie d'extrémité de l'élément de compression du dispositif de la figure 1,
- la figure 4 est une vue en coupe transversale schématique du dispositif de la figure 1,
- la figure 5 est une vue analogue à la figure 4 montrant le montage ou démontage de l'élément de compression du dispositif de la figure 1,
- la figure 6 est une vue analogue à la figure 4 montrant les positions de repos et de compression de l'élément de compression du dispositif de la figure 1, et
- les figures 7 à 10 illustrent selon des vues en perspective des variantes de réalisation de l'invention.

Des références numériques identiques sont utilisées pour désigner des éléments identiques ou analogues.

L'invention concerne, tel qu'illustré, un dispositif 1 support de tube 3 d'un échangeur 5 de chaleur pour le refroidissement d'une batterie 7 de véhicule.

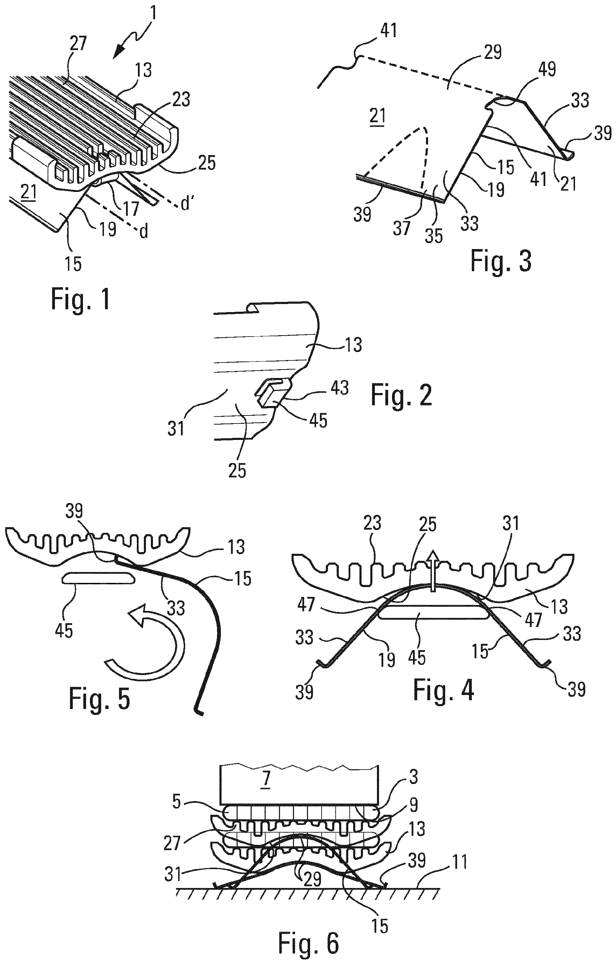

Le dispositif 1 est disposé en particulier sous la batterie 7, voir la figure 6, et est destiné à plaquer le tube 3 de l'échangeur de chaleur contre la face de dessous 9 de la batterie. Ledit dispositif 1 est lui-même supporté en projection verticale par un élément ou surface 11 d'appui du véhicule, par exemple le fond d'un boîtier de logement de la ou des batteries.

En variante, le dispositif pourrait mettre le tube en contact avec une autre face de la batterie, non représenté, par exemple sur une face latérale ou une face de dessus de la batterie.

Le dispositif comprend une base 13 sur laquelle le tube 3 est destiné à être monté et un élément de compression 15 monté sur la base et destiné à appliquer le tube contre la batterie.

Le dispositif comprend encore des éléments de liaison 17 de l'élément de compression 15 sur la base 13.

Selon l'invention, les éléments de liaison 17 sont configurés pour venir en prise avec une face 19 de l'élément de compression, opposée à ladite base, autrement dit la face inférieure de l'élément de compression. Lesdits éléments de liaison sont en outre en contact avec la base 13 de part et d'autre dudit élément de compression 15.

L'élément de compression 15 comprend en particulier un corps 21, ici en forme de bande longitudinale d'axe d sensiblement parallèle à un axe d'extension longitudinal d' de la base. Ledit corps 21 est relié à la base 13 au moyen desdits éléments de liaison 17. Les éléments de liaison 17 peuvent par exemple être configurés pour venir en prise par pincement sur le corps 21.

Ainsi, l'élément de compression 15 est maintenu contre la base 13 sans trous de perçage et par conséquent il n'est pas créé de zone de contrainte, en particulier autour desdits trous, dans ledit corps qui fragiliserait l'élément de compression.

Ladite base 13 comprend, comme cela est particulièrement visible à la figure 4, une première face 23 conformée pour supporter le tube 3 de façon isolée thermiquement et une seconde face 25 sur laquelle l'élément de compression 15 est destiné à être appliqué lorsque ce dernier est mis en pression.

Lesdites première et seconde faces 23, 25 sont avantageusement opposées l'une à l'autre, de sorte que l'effort appliqué par l'élément de compression 15 sur la seconde face 25, selon la flèche de la figure 4, est transmis directement au tube 3 par la première face 23.

On pourrait encore prévoir un renvoi de l'effort dans une direction orientée inclinée, autre que celle de l'exemple.

Ladite base 13 est pourvue de nervures 27 sur sa première face 23, destinées à être appliquées sur le tube 3 par leur extrémité, ce qui renforce un maintien isolé thermiquement du tube par la base. Cette isolation thermique résulte également de la matière de la base, avantageusement isolante de la chaleur, par exemple en matière plastique isolante.

L'élément de compression 15 est monté flexible sur la base 13, à savoir qu'il peut s'étendre contre la base 13, notamment en largeur, figure 6, pour mettre en pression le tube 3 contre la batterie 7.

L'élément de compression 15 repose également de façon flexible sur l'élément d'appui 11, à savoir qu'il peut s'étendre ou glisser sur l'élément d'appui 11 pour mettre en pression de contact le tube 3 contre la batterie 7.

L'élément de compression 15 est avantageusement un ressort en forme de bande 21, comme précité, à sommet 29 arrondi, ou en forme sensiblement de gouttière renversée. Un tel ressort 15 possède une capacité de flexion de la bande 21 dans une section transversale de la bande, ceci sur toute la longueur de la bande, de préférence de façon homogène sur cette longueur.

Ledit sommet 29 arrondi du ressort est avantageusement reçu dans une zone concave ou un évidement 31 de ladite seconde face, ce qui permet de faciliter le maintien en position du ressort 15 sur la seconde face 25.

Ledit évidement 31 est conformé pour correspondre à une extension maximale du ressort, visible au bas de la figure 6. Ainsi, cet évidement 31 ne gène pas l'extension du ressort 15.

Notamment, ledit évidement 31 est arrondi, à un rayon correspondant à l'extension maximale du ressort 15, où la bande 21 est tangente aux bords longitudinaux de l'évidement 31, et où le ressort 15 plaque le tube 3 contre la batterie 7 selon un effort maximal.

Ladite bande 21 de ressort est en particulier destinée à être montée flexible sur la surface d'appui ou élément d'appui 11, lequel peut être plan tel qu'illustré par la figure 6.

Ladite bande 21 de ressort comporte deux plis 33 ou jambes opposés, lesquels sont configurés pour être mobiles sur la surface d'appui 11.

Lesdits deux plis 33 opposés peuvent notamment comporter des pattes 35 flexibles destinées à être appliquées sur la surface d'appui 11, comme représenté en traits interrompus sur la figure 3. Cette caractéristique accroît la flexibilité du ressort 15 sur la surface d'appui 11.

Ces pattes 35 peuvent comporter une extrémité effilée 37, ce qui renforce encore la flexibilité du ressort 15.

Les extrémités 39 des jambes sont avantageusement recourbées longitudinalement en arrondi vers le haut pour faciliter leur mouvement sur la surface d'appui 11. En fonction de la flexion imprimée au ressort 15, les jambes 33 peuvent notamment écarter ou rapprocher leurs extrémités 39 sur la surface d'appui 11, comme il apparait sur la figure 6.

Ladite bande 21 de ressort, notamment en matériau métallique, est d'épaisseur égale à environ 0,1 à 0,3 mm. De préférence, une telle bande 21 est d'épaisseur comprise entre 0,15 et 0,2 mm. Cette faible épaisseur confère à la bande son caractère flexible.

Lesdits éléments de liaison 17 sont configurés pour venir en prise de part et d'autre de bords 41 opposés de ladite bande 21, notamment au niveau dudit sommet arrondi 29. Les prises sont donc sensiblement latérales sans nécessiter de perçage comme dans l'art antérieur.

Ladite bande 21 de ressort peut s'étendre sur une largeur d'environ 15 mm au repos à environ 25 mm en extension, sensiblement la même largeur que celle de la base 13.

Lesdits éléments de liaison 17 comprennent ici un ou des éléments de prise en forme de crochet 43, comme on le voit particulièrement aux figures 1 et 2, de préférence deux éléments de prise en forme de crochet 43 maintenant ledit élément de compression 15 de part et d'autre de celui-ci. Ces éléments en forme de crochet 43 sont notamment disposés aux extrémités opposées 41 de la bande, de préférence au niveau du sommet arrondi 29 de la bande.

Lesdits deux éléments de prise en forme de crochet 43 sont de préférence identiques l'un à l'autre. Toutefois, les éléments de prise peuvent être de conceptions différentes tant par leurs longueurs que leurs sections transversales, à titre d'exemples. Ils comportent une branche 45 de crochet, en particulier disposée à distance du sommet 29 du ressort et de la surface d'appui 11 pour permettre un débattement en flexibilité du ressort et le moulage de ladite branche.

Lesdits crochets sont notamment disposés sur la base 13 pour permettre le montage ou démontage du ressort 15 en rotation par une extrémité 39 d'un pli 33 du ressort engagée entre la base 13 et chacun des éléments de prise en forme de crochet 43, en particulier leur branche 45 du crochet.

Avantageusement, le ressort 15 est légèrement comprimé sur les éléments de prise en forme de crochet 43 de manière à solidariser, notamment par pincement, le ressort 15 à la base 13. Ce coincement est en particulier réalisé par ladite bande 21 en prise sur les bords latéraux 47 opposés de la branche 45 du crochet.

Le ressort 15 et la base 13 sont en particulier disposés en vis-à-vis sur une même longueur, celle d'extension en longueur du dispositif, le ressort 15 pouvant notamment être muni d'une découpe à ses extrémités 49 à cet effet, voir la figure 3.

Le ou lesdits éléments de prise en forme de crochet 43 sont avantageusement formés en une seule pièce avec la base 13, tel qu'illustré aux figures 1 et 2, de préférence issus de moulage de matière, en particulier en matière plastique.

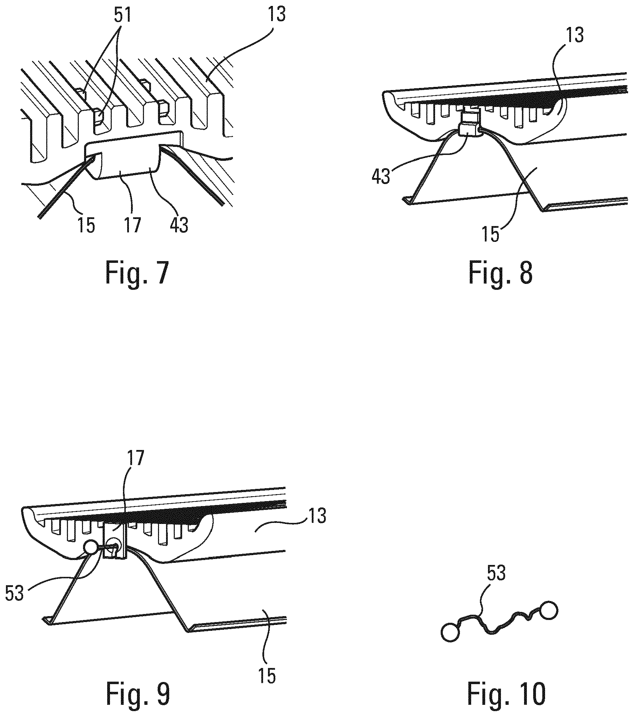

Le ou lesdits éléments de prise en forme de crochet 43 peuvent alternativement être montés rapportés sur la base 13, par exemple être fixés sur la base au moyen de crochets de type clips 51 disposés en saillie des éléments de prise en forme de crochet 43 et engagés dans la base 13, en particulier montés traversant dans la base 13, comme illustré aux figures 7 et 8.

En variante, lesdits éléments de liaison 17 peuvent comporter une sangle élastique 53, figure 10, apte à être tendue sous le ressort 15, et à être attachée aux extrémités des branches 45 de crochet ou à une patte solidaire de la base comme ici à la figure 9.

L'invention concerne également l'ensemble d'un échangeur 5 et d'une pluralité de dispositifs 1 support, tels que décrit ci-dessus, supportant les tubes 3 de l'échangeur. Ledit échangeur est avantageusement configuré pour être disposé contre la batterie 7, en particulier appliqué contre une face 9 de la batterie en vue de son refroidissement.

Le procédé de montage du dispositif est très simple. Il consiste en particulier à monter ledit élément de compression 15 sur la base 13, notamment en engageant ladite bande 21 par rotation entre la base 13 et les éléments de prise en forme de crochet 43. L'élément de compression est coincé sur la branche 45, ce qui permet la manipulation du dispositif en vue de sa mise en service.

Le montage du dispositif en vue de mettre en pression les tubes 3 de l'échangeur de chaleur 5 contre une face 9 de la batterie consiste à disposer les tubes 3 de l'échangeur sur ladite première face 23 de la base de leur dispositif de support respectif et à appliquer en tension l'élément de compression 15 sur ledit élément d'appui 11, par exemple sous l'effet du poids de la batterie.

L'invention apporte ainsi une solution simple et fiable pour assurer une mise en pression en contact thermique d'un tube, notamment un tube d'un échangeur de chaleur pour véhicule contre une surface d'échange thermique.

## Revendications

1. . Dispositif (1) support d'un tube (3), notamment d'un tube (3) d'un échangeur de chaleur (5) destiné à venir contre une batterie (7) de véhicule pour son refroidissement, le dispositif (1) comprenant une base (13) sur laquelle le tube (3) est destiné à être monté, un élément de compression (15) du tube (3) contre la batterie (7) et un ou des éléments de liaison (17) de l'élément de compression (15) sur la base (13), les éléments de liaison (17) étant configurés pour venir en prise avec une face (19) de l'élément de compression (15), opposée à ladite base (13), en étant en contact avec la base (13) de part et d'autre dudit élément de compression (15), **caractérisé en ce que** ladite base (13) comprenant une première face (23) conformée pour supporter le tube (3) de façon isolée thermiquement et une seconde face (25) sur laquelle l'élément de compression (15) est destiné à s'appliquer, une fois mis en pression,
l'élément de compression (15) est un ressort en forme de bande (21) à sommet (29) arrondi, ou en forme sensiblement de gouttière renversée, ledit sommet (29) arrondi du ressort étant reçu dans une zone concave ou un évidement (31) de ladite seconde face (25).

2. . Dispositif (1) selon la revendication 1, dans lequel lesdites première et seconde faces (23, 25) sont opposées l'une à l'autre, de sorte que l'effort appliqué par l'élément de compression (15) sur la seconde face (25) est transmis directement au tube (3) par la première face (23).

3. . Dispositif (1) selon la revendication précédente, dans lequel ladite bande (21) de ressort est destinée à être montée flexible sur une surface d'appui (11).

4. . Dispositif (1) selon l'une des revendications précédentes, dans lequel ladite bande (21) de ressort est d'épaisseur égale à environ 0,1 à 0,3 mm.

5. . Dispositif (1) selon l'une quelconque des revendications précédentes, dans lequel le ou lesdits éléments de liaison (17) sont configurés pour venir en prise de part et d'autre de bords opposés longitudinaux (41) de l'élément de compression (15).

6. . Dispositif (1) selon la revendication précédente, dans lequel le ou lesdits éléments de liaison (17) comprennent deux éléments de prise en forme de crochet (43) maintenant ledit élément de compression (15) de part et d'autre de la base (13).

7. , Dispositif (1) selon la revendication précédente, dans lequel lesdits deux éléments de prise en forme de crochet (43) comprennent une branche (45) disposée à distance du sommet (29) du ressort pour permettre un débattement en flexibilité du ressort.

8. . Dispositif (1) selon l'une des revendications 6 ou 7, dans lequel lesdits deux éléments de prise en forme de crochet (43) sont disposés sur la base (13) pour permettre le montage ou démontage du ressort (15) en rotation par des bords du ressort, engagé entre la base (13) et chacun des éléments de prise en forme de crochet (43).

9. . Dispositif (1) selon l'une quelconque des revendications précédentes, dans lequel le ou lesdits éléments de liaison (17) et ledlt élément de compression (15) sont respectivement configurés pour que, au montage de l'élément de compression (15), ce denier soit comprimé sur le ou les éléments de liaison (17), de manière à solidariser, notamment par pincement, l'élément de compression (15) à la base (13).

10. . Dispositif (1) selon l'une quelconque des revendications précédentes, dans lequel le ou lesdits éléments de liaison (17) sont formés en une seule pièce avec la base (13).

11. . Dispositif (1) selon l'une des revendications 1 à 9 dans lequel le ou lesdits éléments de liaison (17) sont montés rapportés sur la base (13).

12. . Dispositif (1) selon l'une quelconque des revendications précédentes, dans lequel le ou lesdits éléments de liaison (17) comportent une sangle élastique (53) apte à être tendue sous l'élément de compression (15).

13. . Ensemble d'un échangeur de chaleur, comprenant des tubes (3), et d'une pluralité de dispositifs (1) support, selon l'une quelconque des revendications précédentes, supportant lesdits tubes (3).

14. . Batterie comprenant un ensemble selon la revendication 13.

## Patentansprüche

1. Stützvorrichtung (1) für ein Rohr (3), insbesondere für ein Rohr (3) eines Wärmetauschers (5), das zum Anordnen an einer Fahrzeugbatterie (7) zum Kühlen ausgebildet ist, wobei die Vorrichtung (1) eine Basis (13), zur Montage auf welcher das Rohr (3) ausgebildet ist, ein Druckelement (15) zum Drücken des Rohrs (3) an die Batterie (7) und ein Verbindungselement oder Verbindungselemente (17) zum Verbinden des Druckelements (15) mit der Basis (13) umfasst, wobei die Verbindungselemente (17) ausgebildet sind, in Eingriff mit einer Fläche (19) des Druckelements (15) gegenüber der Basis (13) durch den Kontakt mit der Basis (13) an beiden Seiten des Druckelements (15) gebracht zu werden, **dadurch gekennzeichnet, dass** wobei die Basis (13) eine zum wärmegedämmten Stützen des Rohrs (3) ausgebildete erste Fläche (23) und eine zweite Fläche (25), zum Anbringen auf dieser das Druckelement (15) ausgebildet ist, sobald es unter Druck steht, umfasst,
das Druckelement (15) eine Feder in der Form eines Bandes (21) mit abgerundetem oberen Ende (29) oder in der Form im Wesentlichen einer umgekehrten Rinne ist, wobei das abgerundete obere Ende (29) der Feder in einem konkaven Bereich oder einer Vertiefung (31) der zweiten Fläche (25) aufgenommen wird.

2. Vorrichtung (1) nach Anspruch 1, wobei sich die erste und zweite Fläche (23, 25) gegenüberliegen, so dass die vom Druckelement (15) auf die zweite Fläche (25) ausgeübte Kraft direkt auf das Rohr (3) von der ersten Fläche (23) übertragen wird.

3. Vorrichtung (1) nach dem vorhergehenden Anspruch, wobei das Federband (21) zum flexiblen Montieren auf einer Auflagefläche (11) ausgebildet ist.

4. Vorrichtung (1) nach einem der vorhergehenden Ansprüche, wobei das Federband (21) eine Stärke von etwa 0,1 bis 0,3 mm aufweist.

5. Vorrichtung (1) nach einem der vorhergehenden Ansprüche, wobei das Verbindungselement oder die Verbindungselemente (17) ausgebildet sind, an beiden Seiten von gegenüberliegenden Längsrändern (41) des Druckelements (15) in Eingriff gebracht zu werden.

6. Vorrichtung (1) nach dem vorhergehenden Anspruch, wobei das Verbindungselement oder die Verbindungselemente (17) zwei hakenförmige Eingriffselemente (43) zum Halten des Druckelements (15) an beiden Seiten der Basis (13) umfassen.

7. Vorrichtung (1) nach dem vorhergehenden Anspruch, wobei die zwei hakenförmigen Eingriffselemente (43) einen in Abstand zum oberen Ende (29) der Feder angeordneten Abschnitt (45) umfassen, um ein flexibles Federn der Feder zu ermöglichen.

8. Vorrichtung (1) nach Anspruch 6 oder 7, wobei die zwei hakenförmigen Eingriffselemente (43) auf der Basis (13) angeordnet sind, um die Montage oder Demontage der Feder (15) in Drehung durch die Ränder der Feder im Eingriff zwischen der Basis (13) und jedem der hakenförmigen Eingriffselemente (43) zu ermöglichen.

9. Vorrichtung (1) nach einem der vorhergehenden Ansprüche, wobei das Verbindungselement oder die Verbindungselemente (17) und das Druckelement (15) jeweils so ausgebildet sind, dass bei der Montage des Druckelements (15) dieses auf dem Verbindungselement oder den Verbindungselementen (17) so zusammengedrückt wird, dass das Druckelement (15) insbesondere durch Klemmen mit der Basis (13) verbunden wird.

10. Vorrichtung (1) nach einem der vorhergehenden Ansprüche, wobei das Verbindungselement oder die Verbindungselemente (17) in einem einzigen Teil mit der Basis (13) ausgebildet sind.

11. Vorrichtung (1) nach einem der Ansprüche 1 bis 9, wobei das Verbindungselement oder die Verbindungselemente (17) auf der Basis (13) angebaut montiert sind.

12. Vorrichtung (1) nach einem der vorhergehenden Ansprüche, wobei das Verbindungselement oder die Verbindungselemente (17) einen elastischen Gurt (53) umfassen, der zum Spannen unter dem Druckelement (15) ausgebildet ist.

13. Anordnung eines Wärmetauschers umfassend Rohre (3) und eine Vielzahl von Stützvorrichtungen (1) nach einem der vorhergehenden Ansprüche zum Stützen der Rohre (3).

14. Batterie umfassend eine Anordnung nach Anspruch 13.

## Claims

1. Support device (1) for a tube (3), in particular a tube (3) of a heat exchanger (5) designed to come into contact with a vehicle battery (7) for cooling thereof, the device (1) comprising a base (13) on which the tube (3) is designed to be mounted, an element (15) for compressing the tube (3) against the battery (7), and one or more elements (17) for connecting the compression element (15) to the base (13), the connecting elements (17) being configured to engage with a face (19) of the compression element (15) opposite said base (13) while being in contact with the base (13) on either side of said compression element (15), **characterized in that** said base (13) comprising a first face (23) shaped to support the tube (3) in a thermally insulated fashion, and a second face (25) on which the compression element (15) is designed to rest when under pressure,
the compression element (15) is a spring in the form of a strip (21) with rounded apex (29), or substantially in the form of an inverted trough, said rounded apex (29) of the spring being received in a concave zone or a recess (31) of said second face (25).

2. Device (1) according to Claim 1, wherein said first and second faces (23, 25) are opposite each other such that the force applied by the compression element (15) to the second face (25) is transmitted directly to the tube (3) by the first face (23).

3. Device (1) according to the preceding claim, wherein said spring strip (21) is designed to be mounted flexibly on a support surface (11).

4. Device (1) according to one of the preceding claims, wherein said spring strip (21) has a thickness equal to approximately 0.1 to 0.3 mm.

5. Device (1) according to any one of the preceding claims, wherein said connecting element or elements (17) are configured to engage on either side of longitudinal opposing edges (41) of the compression element (15).

6. Device (1) according to the preceding claim, wherein said connecting element or elements (17) comprise two hook-shaped engagement elements (43) holding said compression element (15) on either side of the base (13).

7. Device (1) according to the preceding claim, wherein said two hook-shaped engagement elements (43) comprise a branch (45) arranged at a distance from the apex (29) of the spring to allow an elastic deflection of the spring.

8. Device (1) according to either of Claims 6 and 7, wherein said two hook-shaped engagement elements (43) are arranged on the base (13) to allow the spring (15) to be fitted or removed by rotation by spring edges engaged between the base (13) and each of the hook-shaped engagement elements (43).

9. Device (1) according to any one of the preceding claims, wherein said connecting element or elements (17) and said compression element (15) are configured respectively so that, on mounting of the compression element (15), the latter is compressed on the connecting element or elements (17) so as to fasten, in particular by gripping, the compression element (15) to the base (13).

10. Device (1) according to any one of the preceding claims, wherein said connecting element or elements (17) are formed integrally with the base (13).

11. Device (1) according to one of Claims 1 to 9, wherein said connecting element or elements (17) are mounted attached to the base (13).

12. Device (1) according to any one of the preceding claims, wherein said connecting element or elements (17) comprise an elastic strap (53) able to be stretched below the compression element (15).

13. Assembly of a heat exchanger, comprising tubes (3), and of a plurality of support devices (1), according to any one of the preceding claims, supporting said tubes (3).

14. Battery comprising an assembly according to Claim 13.
